# EUROPÄISCHE PATENTSCHRIFT

(11) **EP 4 060 210 B1**
(45) Veröffentlichungstag und Bekanntmachung des Hinweises auf die Patenterteilung: **15.05.2024**
(21) Anmeldenummer: 22157713.3
(22) Anmeldetag: 21.02.2022
(51) Int. Cl.: F16K 1/02, F16K 15/18, F16K 31/50

(54) **RÜCKFLUSSVERHINDERERVENTIL**
BACKFLOW PREVENTER VALVE
CLAPET ANTI-RETOUR

(30) Priorität: 18.03.2021 DE 202021101378 U
(43) Veröffentlichungstag der Anmeldung: 21.09.2022
(73) Patentinhaber: Flühs Drehtechnik GmbH, 58515 Lüdenscheid (DE)
(72) Erfinder: Thurau, Friedrich, 58849 Herscheid (DE)
(74) Vertreter: Patentanwälte Dörner & Kötter PartG mbB

(56) Entgegenhaltungen:
- EP-A2- 2 325 533
- DE-U1- 29 912 734

## Beschreibung

Die Erfindung betrifft ein Rückflussverhindererventil nach dem Oberbegriff des Patentanspruchs 1.

Derartige Rückflussverhindererventile, wie sie beispielsweise in der EP 2 325 533 B1 beschrieben sind, werden in Absperrarmaturen eingesetzt. Dabei ist an einem Kolben ein Dichtungselement angeordnet, welches innerhalb der Armatur in den Leitungsweg einbringbar ist, wodurch der Durchfluss gesperrt ist. Dabei ist der Kolben schräg zur Leitung angeordnet und mit einem Handrad verbunden, über das der Kolben bewegbar ist. Zur Rückflussverhinderung ist der Kolben regelmäßig über eine Druckfeder in Richtung der Dichtfläche vorgespannt. Zum Absperren des Rückflussverhindererventils ist ein Druckstück angeordnet, das den Kolben umfassend auf das Dichtelement des Kolbens aufgefahren werden kann. Dokument DE29912734U offenbart ein Ventiloberteil für Armaturen, das eine Druckausgleichsbohrung aufweist. Die Druckausgleichsbohrung wird durch die Dichtungsscheibe des Ventils abgedeckt.

Ventiloberteile der vorgenannten Art haben sich in der Praxis bewährt. In bestimmte Situationen, beispielsweise beim Wechsel einer in einer Leitung angeordneten Wasseruhr, zu deren Entfernen der Wasserzulauf bereits über ein Absperrventil versperrt ist, besteht beim Absperren des vorstehenden Ventils das Problem, dass das von dem Druckstück beim Verfahren verdrängte Wasser nicht entweichen kann, wodurch der Druck in dem Leitungsstück erheblich ansteigt, bis eine Bewegung des Druckstücks von Hand nicht mehr möglich ist. Der erheblich ansteigende Druck kann zudem auch zur Beschädigung des Dichtungselements führen.

Hier will die Erfindung Abhilfe schaffen. Der Erfindung liegt die Aufgabe zugrunde, ein Rückflussverhindererventil der vorgenannten Art zu schaffen, bei dem ein übermäßiger Druckanstieg in der Leitung beim Verfahren des Druckstücks zum Absperren der Leitung verhindert ist. Gemäß der Erfindung wird diese Aufgabe durch die Merkmale des Patentanspruchs 1 gelöst.

Mit der Erfindung ist ein Rückflussverhindererventil geschaffen, bei dem ein übermäßiger Druckanstieg in der Leitung beim Verfahren des Druckstücks zum Absperren der Leitung verhindert ist. Dadurch, dass durch die Dichtanordnung ein Druckausgleichskanal geführt ist, in dem eine Überdruckventilbaugruppe angeordnet ist, ist bei Übersteigen eines Grenzdrucks in der Leitung ein Entweichen von verdrängtem Wasser durch den Druckausgleichskanal ermöglicht. Bevorzugt umfasst die Dichtanordnung eine Kegelscheibe, an der eine Dichtscheibe anliegt.

In Weiterbildung der Erfindung weist die Kegelscheibe einen ringförmigen Steg auf, dessen Außendurchmesser gleich oder kleiner dem endseitigen Innendurchmesser des Kolbenraums ist, in den er einschiebbar ist. Hierdurch ist eine Zentrierung der Kegelscheibe bei Anlage an dem Kolbenraum erzielt, wodurch ein gleichmäßiger Andruck des Druckzylinders an die Kegelscheibe gewährleistet ist.

In Ausgestaltung der Erfindung weist der Rückschlagkolben endseitig einen mit einem Außengewinde versehenen Stift auf, auf dem die Dichtanordnung aufgeschoben und über eine Mutter befestigt ist. Hierdurch ist eine einfache Montage und Remontage der Dichtanordnung ermöglicht.

In weiterer Ausgestaltung der Erfindung ist der Druckausgleichskanal zumindest teilweise durch wenigstens eine radial in den Stift eingebrachte Sackbohrung und/oder wenigstens eine axial verlaufende, von außen in den Stift eingebrachte Kerbe gebildet, die sich über das Außengewinde erstreckt, auf das die Mutter aufgeschraubt ist. Hierdurch ist eine bauraumminimierte Integration des Druckausgleichskanals ermöglicht. Durch eine von außen in den Stift eingebrachte Kerbe, die sich über das Außengewinde erstreckt, ist die Durchgängigkeit des Druckausgleichskanals auch nach Aufschrauben einer Mutter gewährleistet.

In Weiterbildung der Erfindung umfasst die Überdruckventilbaugruppe eine Dichtung, die mit einer Druckbegrenzungsfeder verbunden ist, die mit einer definierten Federkraft gegen die Dichtung vorgespant ist und über welche die Dichtung in einer den Druckausgleichkanal abdichtenden Position gehalten ist, solange eine der Druckbegrenzungsfeder entgegen gerichtete Kraft, die durch einen auf die Dichtung wirkenden Druck bewirkt ist, die definierte Federkraft nicht übersteigt. Hierdurch ist eine einfache und zugleich robuste Überdruckventilbaugruppe erzielt. Die Dichtung ist bevorzugt als Dichtring ausgebildet.

In Ausgestaltung der Erfindung ist die Druckbegrenzungsfeder als Schraubenfeder ausgebildet, die auf den Stift diesen umgebend aufgebracht ist und an der Mutter anliegt. Hierdurch ist eine kompakte Bauweise erzielt. Alternativ kann die Druckbegrenzungsfeder auch als Tellerfederpaket ausgebildet sein.

In weiterer Ausgestaltung der Erfindung ist die Mutter eine Kragenmutter. Durch den Kragen ist eine hinreichende Anlagefläche für die Druckbegrenzungsfeder bereitgestellt.

In Weiterbildung der Erfindung ist zwischen der Druckbegrenzungsfeder und der Dichtung eine Scheibe angeordnet. Hierdurch ist eine gleichmäßige Krafteinleitung auf die Dichtung bewirkt.

In Ausgestaltung der Erfindung umfasst die Dichtanordnung eine Kegelscheibe, in der eine sich in Richtung des Rückschlagkolbens verjüngende Stufenbohrung eingebracht ist, in welcher die Dichtung angeordnet ist. Hierdurch ist eine Dichtposition und axial versetzt zu dieser eine Durchlassposition für die Dichtung bereitgestellt. Dabei ist die jeweilige Position der Dichtung über die Federstellung, die durch eine auf die Druckbegrenzungsfeder einwirkende Gegenkraft veränderbar ist, beeinflussbar.

In weiterer Ausgestaltung der Erfindung ist die Spindel drehfest mit einer Gewindehülse verbunden, deren Innengewinde mit einem in ein außen an dem Kopfstück angeordneten Außengewinde im Eingriff ist. Hierdurch ist eine Verschiebung des den Rückschlagkolben aufnehmenden Druckzylinders durch Drehung der Spindel bewirkt. Bevorzugt ist die Spindel drehfest mit einem Deckelstück verbunden, das sie durchdringt und an dem die Gewindehülse befestigt ist.

In Weiterbildung der Erfindung weist die Spindel endseitig ein Außengewinde auf, das mit einem endseitig in dem Druckzylinder angeordneten Innengewinde im Eingriff ist. Dabei ist das Innengewinde vorteilhaft entgegengerichtet zu dem in das Außengewinde des Kopfstücks eingreifenden Innengewinde der Gewindehülse. Hierdurch ist durch Drehung der Spindel eine Verschiebung des von dem Druckzylinder aufgenommenen Rückschlagkolbens additiv zur gleichgerichteten Verschiebung des Druckzylinders in dem Kopfstück bewirkt.

In Ausgestaltung der Erfindung ist an dem Druckzylinder eine Feder angeordnet, die gegen den Rückschlagkolben vorgespannt ist. Hierdurch ist ein Rückfluss von Wasser in der Leitung bei abnehmendem Leitungsdruck verhindert.

In weiterer Ausgestaltung der Erfindung ist die Innenwandung des Kopfstücks an seinem der Spindel zugewandten Ende als Innenvielkant ausgebildet, wobei der Druckzylinder zumindest teilweise außen mit einem korrespondierenden Außenvielkant versehen ist, über den es innerhalb des Kopfstücks axial verschiebbar geführt ist. Hierdurch ist ein Entweichen von durch die Bewegung des Druckzylinders verdrängtem Wasservolumens ermöglicht.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Fig. 1: die Darstellung eines Rückflussverhindererventils im Teilschnitt;

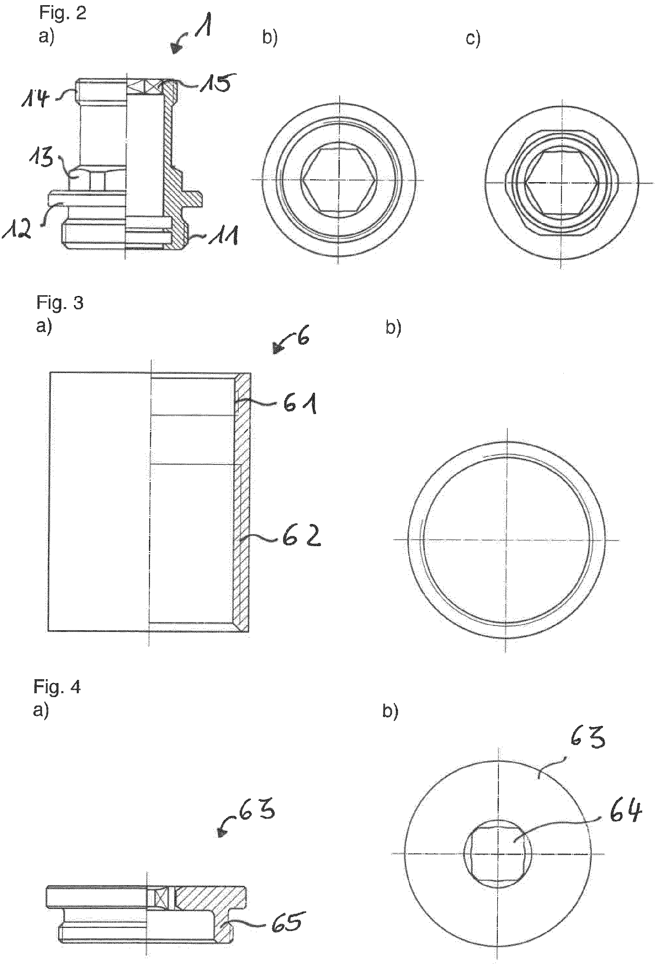

- Fig. 2: die Darstellung des Kopfstücks des Rückflussverhindererventils aus Figur 1
a) im Teilschnitt
b) in der Ansicht von unten;
c) in der Draufsicht;
- Fig. 3: die Darstellung der Gewindehülse des Rückflussverhindererventils aus Figur 1
a) im Teilschnitt;
b) in der Draufsicht;;
- Fig. 4: die Darstellung des Deckelstücks des Rückflussverhindererventils aus Figur 1
a) im Teilschnitt
b) in der Draufsicht;

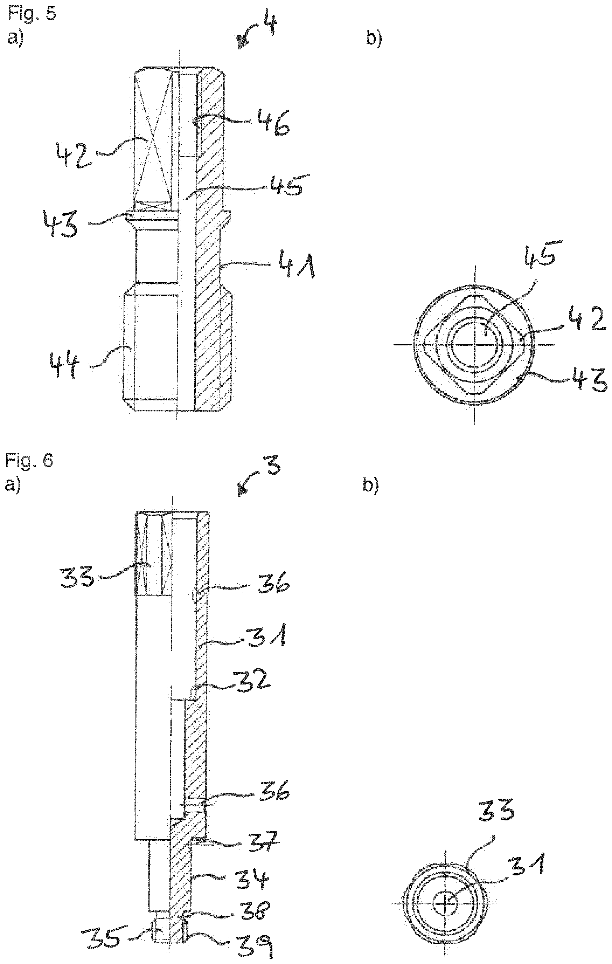

- Fig. 5: die Darstellung der Spindel des Rückflussverhindererventils aus Figur 1
a) im Teilschnitt;
b) in der Draufsicht;
- Fig. 6: die Darstellung des Rückschlagkolbens des Rückflussverhindererventils aus Figur 1
a) im Teilschnitt
b) in der Draufsicht;

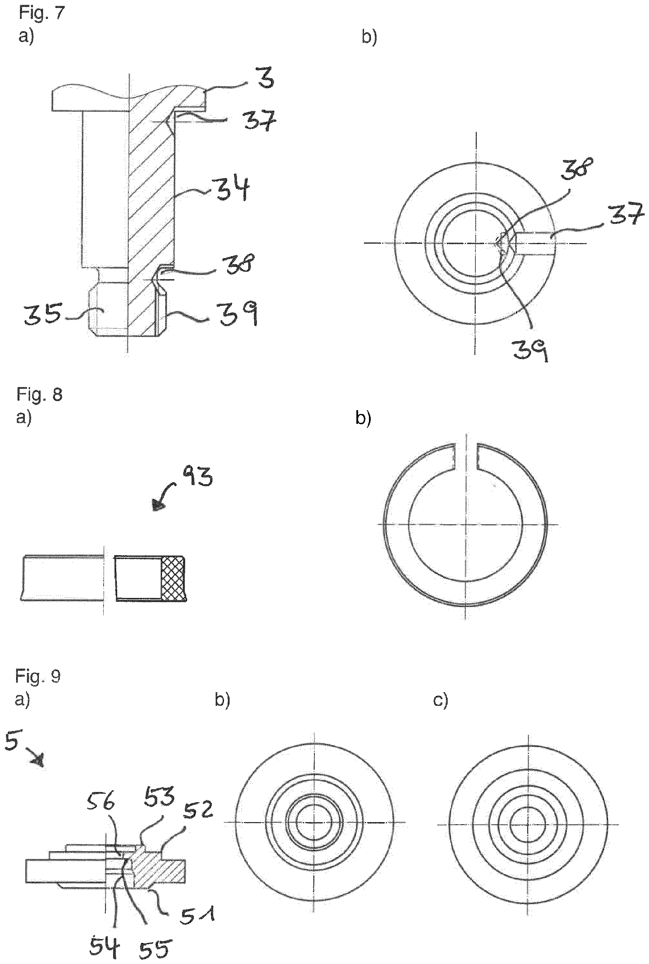

- Fig. 7: die Detaildarstellung des Stiftes des Rückschlagkolbens aus Figur 6
a) im Teilschnitt
b) in der Ansicht von unten
- Fig. 8: die Darstellung des Dichtrings des Rückflussverhindererventils aus Figur 1
a) im Teilschnitt;
b) in der Draufsicht;
- Fig. 9: die Darstellung der Kegelscheibe des Rückflussverhindererventils aus Figur 1
a) im Teilschnitt
b) in der Ansicht von unten;
c) in der Draufsicht;
- Fig. 10: die schematische Darstellung einer Armatur mit angeordnetem Rückflussverhindererventil mit eingefahrenem Druckzylinder im Teilschnitt;

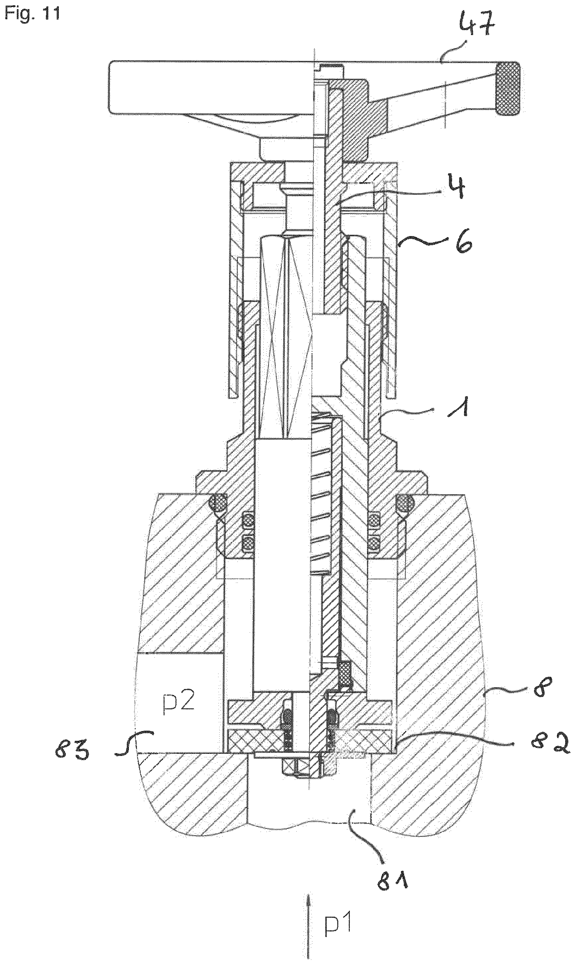

- Fig. 11: die schematische Darstellung der Armatur aus Figur 10 mit angeordnetem Rückflussverhindererventil mit ausgefahrenem Druckzylinder im Teilschnitt und

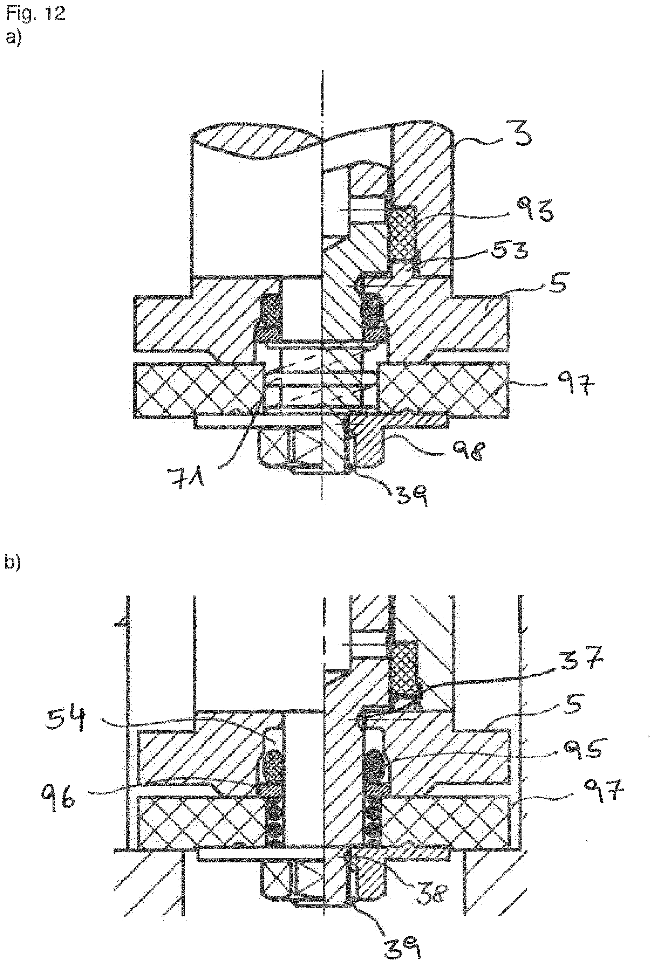

- Fig. 12: die schematische Detaildarstellung der Dichtanordnung des Rückschlagkolbens des Rückflussverhindererventils aus Figur 10
a) mit Überdruckventilbaugruppe in Schließposition (Druckausgleichskanal verschlossen);
b) mit Überdruckventilbaugruppe in geöffneter Position (Druckausgleichskanal durchgängig).

Das als Ausführungsbeispiel gewählte Rückflussverhindererventil besteht im Wesentlichen aus einem Kopfstück 1, das von einem Druckzylinder 2 durchdrungen ist, in dem ein Rückschlagkolben 3 angeordnet ist, an dem eine Kegelscheibe 5 befestigt ist, wobei der Druckzylinder 2 über eine Spindel 4 mit einem Handrad 47 verbunden ist, über das er axial in dem Kopfstück 1 verschiebbar ist.

Das Kopfstück 1 ist ein weitgehend hohlzylindrisch ausgeführtes Messingdrehteil. An seinem unteren, armaturseitigen Ende ist an dem Kopfstück 1 ein erstes Außengewinde 11 angebracht, welches von einem umlaufenden Kragen 12 begrenzt ist. An den Kragen 12 schließt sich ein Außensechskant 13 an, der in einen außendurchmesserverjüngten Abschnitt übergeht, an dessen Ende ein zweites Außengewinde 14 zur Aufnahme einer Gewindehülse 6 eingebracht ist. Innen ist in das Kopfstück 1 in Höhe des zweiten Außengewindes 14 ein Innensechskantkragen 15 zur Führung des Druckzylinders 2 eingebracht. An seiner dem ersten Außengewinde 11 entgegengesetzten Innenseite sind in das Kopfstück 1 parallel zueinander zwei Nuten 16, 17 zur Aufnahme von O-Ringen 91, 92 eingebracht. Außen ist an dem Kopfstück 1 unterhalb des Kragens 12 ein O-Ring 99 zur Abdichtung gegenüber einer Armatur 8 angeordnet.

Der Druckzylinder 2 ist als im Wesentlichen hohlzylinderförmig ausgebildetes Messingdrehteil ausgeführt. Innen ist in dem Druckzylinder 2 eine Trennwand 21 angeordnet, die einen zylindrischen Kolbenraum 22 begrenzt, der an seinem der Trennwand 21 gegenüberliegenden Ende einen durchmessererweiterten Absatz 23 zur Aufnahme eines Dichtrings 93 aufweist, über den der Rückschlagkolben 3 in dem Kolbenraum 22 verschiebbar geführt ist. An seiner dem Kolbenraum 22 gegenüberliegenden Seite in den Druckzylinder 2 ein Innengewinde 24 eingebracht, das die Spindel 4 mit ihrem Außengewinde 44 aufnimmt. Außen ist an dem Druckzylinder 2 im Bereich des Innengewindes 24 ein sechskantförmiger Abschnitt 25 vorhanden, dessen Außenkontur im Wesentlichen der Innenkontur des Innensechskantkragens 15 des Kopfstücks 1 entspricht.

Die Spindel 4 ist als im Wesentlichen zylinderförmig ausgebildetes Messingdrehteil ausgeführt. Die Spindel 4 ist unterteilt in einen zylindrischen Abschnitt 41 und einen sechskantförmig ausgebildeten Abschnitt 42, zwischen denen ein umlaufender Kragen 43 angeordnet ist. Außen ist der zylindrische Abschnitt 41 mit einem Außengewinde 44 versehen. In die Spindel 4 ist zentrisch eine axiale Bohrung 45 eingebracht, die an ihrem dem sechskantförmig ausgebildeten Abschnitt 42 zugewandten Ende ein Innengewinde 46 aufweist. Das Innengewinde 46 dient zur Aufnahme einer Schraube 94 zur Befestigung des auf den Sechskantabschnitt 42 aufgesteckten Handrades 47.

Zwischen Druckzylinder 2 und Handrad 47 ist auf die Spindel 4 ein kreisförmiges Deckelstück 63 aufgebracht, das eine sechskantförmige Ausnehmung 64 aufweist, mit der es auf dem Kragen 43 der Spindel 4 aufliegt. Das Deckelstück 63 ist so formschlüssig mit der Spindel 4 verbunden. Auf seiner dem Kopfstück 1 zugewandten Seite ist an das Deckelstück 63 beabstandet zu seinem Außenrand ein umlaufender Außengewindesteg 65 angeformt, auf den ein erstes Innengewinde 61 der Gewindehülse 6 aufgeschraubt ist. An ihrem dem ersten Innengewinde 61 gegenüberliegenden Ende ist in der Gewindehülse 6 ein zweites Innengewinde 62 eingebracht, das sich bis über die halbe Länge der Gewindehülse 6 erstreckt und mit dem die Gewindehülse 6 auf das zweite Außengewinde 14 des Kopfstücks 1 aufgeschraubt ist.

Das zweite Innengewinde 62 der Gewindehülse 6 ist gegenläufig zu dem Außengewinde 44 der Spindel 4 ausgeführt, sodass durch eine Drehung der Spindel 4 über das Handrad 47 eine axiale Bewegung des Druckzylinders 2 entlang der Spindel 4 sowie der Gewindehülse 6 entlang des Kopfstücks 1 in dieselbe Richtung bewirkt ist.

Der Rückschlagkolben 3 ist im Wesentlichen als zylinderförmiges Messingdrehteil ausgeführt. An seinem der Trennwand 21 des Druckzylinders 2 zugewandten Ende ist in den Rückschlagkolben 3 axial eine Stufensackbohrung 31 zur Aufnahme einer Feder 7 eingebracht, durch die ein Absatz 32 gebildet ist, an der die Feder 7 anliegt. An seinem der Spindel 4 zugewandten Ende ist an den Rückschlagkolben 3 außen ein Außenvielkant 33 angeordnet. Zwischen dem Rückschlagkolben 3 und dem zylindrischen Kolbenraum 22 ist so ein Zwischenraum für den Durchtritt von Wasser gebildet. An seinem dem Außenvielkant 33 entgegengesetzten Ende weist der Rückschlagkolben einen Stift 34 zur Aufnahme der Kegelscheibe 5 auf, der endseitig in einen Gewindekopf 35 übergeht.

Die Außenmantelfläche des Rückschlagkolbens 3 ist in dem gesamten innerhalb des Kolbenraums 22 des Druckzylinders 2 axial verschiebbaren Bereich, das heißt von dem Außenvielkant 33 bis zum Stift 34, mit einer Teflonschicht versehen. Im Bereich der Stufensackbohrung 31 sind in den Rückschlagkolben 3 Druckausgleichsbohrungen 36 eingebracht, die dem Eintritt oder dem Austritt von Wasser bei Bewegung des Rückschlagkolbens 3 innerhalb des Kolbenraumes 22 dienen. Die Druckausgleichsbohrungen 36 münden in dem zwischen dem Rückschlagkolben 3 und dem zylindrischen Kolbenraum 22 gebildeten Zwischenraum. In dem Übergang zum Stift 34 ist der Rückschlagkolben 3 mit einer ersten Sackbohrung 37 versehen. Eine zweite Sackbohrung 38 ist axial beabstandet zur ersten Sackbohrung 37 in den Übergang des Stiftes 34 zum Gewindekopf 35 eingebracht. Der Gewindekopf 35 ist über eine gesamt Länge mit einer axialen Kerbe 39 versehen, die in der zweiten Sackbohrung 38 mündet.

Auf dem Stift 34 des Rückschlagkolbens 3 ist die Kegelscheibe 5 aufgeschoben. Die Kegelscheibe 5 ist im Ausführungsbeispiel als Messingdrehteil ausgeführt. An ihrer dem Kopfstück 1 abgewandten Seite ist an die Kegelscheibe 5 ein kegelförmiger Absatz 51 angeformt. Auf ihrer dem kegelförmigen Absatz 51 gegenüberliegenden Seite weist die Kegelscheibe 5 einen durchmesserreduzierten Abschnitt 52 auf, an den ein ringförmiger Steg 53 angeformt ist. Zentrisch ist die Kegelscheibe 5 mit einer Stufenbohrung 54 versehen, welche im Bereich des Übergangs zum durchmesserreduzierten Abschnitt 52 einen durchmesserreduzierten Durchgang 56 aufweist durch den ein Absatz 55 gebildet ist.

In montiertem Zustand ist die Spindel 4 mit ihrem Außengewinde 44 in das Innengewinde 24 des Druckzylinders 2 eingeschraubt. Auf den Sechskantabschnitt 42 der Spindel 4 ist das Deckelstück 63 aufgesteckt, das auf dem Kragen 43 der Spindel 4 aufliegt und mit der Spindel 4 formschlüssig verbunden ist. Auf dem Deckelstück 63 liegt das Handrad 47 auf, das auf den Sechskantabschnitt 42 der Spindel 4 aufgesteckt und über die Schraube 94, die in das Innengewinde 46 der Spindel 4 eingeschraubt ist, verbunden ist. Auf den Außengewindesteg 65 des Deckelstücks 63 ist die Gewindehülse 6 mit ihrem ersten Innengewinde 61 aufgeschraubt, wobei deren zweites Innengewinde 62 auf das zweite Außengewinde 14 des Kopfstücks aufgeschraubt ist.

Der Rückschlagkolben 3 ist mit seinem Außenvielkant 33 in den zylindrischen Kolbenraum 22 des Druckzylinders 2 eingeschoben, wobei zwischen dem Absatz 32 des Rückschlagkolbens 3 und der Trennwand 21 des Druckzylinders 2 eine als Schraubendruckfeder ausgebildete Feder 7 angeordnet ist. Der den Au-βensechskantabschnitt 25 des Druckzylinders 2 begrenzende Absatz 26 schlägt dabei in einem in das Kopfstück 1 eingefahrenen Zustand des Druckzylinders 2 an den Innensechskantkragen 15 des Kopfstücks 1 an, durch den der Au-βensechskantabschnitt 25 hindurchtritt. Der Druckzylinder 2 ist über die beiden O-Ringe 91, 92 gegenüber dem Kopfstück 1 abgedichtet.

Auf den Stift 34 des Rückschlagkolbens 3 ist die Kegelscheibe 5 derart aufgebracht, dass der ringförmige Steg 53 in einer in den Kolbenraum 22 eingefahrenen Position in den durchmessererweiterten Absatz 23 des Druckzylinders 2 eingreift und an dem Dichtring 93 anliegt. In dieser Position befindet sich die erste Sackbohrung 37 innerhalb des Durchgangs 56 der Kegelscheibe 5.

In die Stufenbohrung 54 der Kegelscheibe 5 ist ein Dichtring 95 eingebracht, an der eine Scheibe 96 anliegt und die den Stift 34 gegenüber der Kegelscheibe 5 abdichtet. An der Kegelscheibe 5 anliegend ist eine dem Durchmesser der Kegelscheibe 5 entsprechende Dichtscheibe 97 angeordnet. Die Kegelscheibe 5 und die Dichtscheibe 97 sind mittels einer Kragenmutter 98, die auf den Gewindekopf 35 des Stiftes 34 aufgeschraubt ist, an dem Rückschlagkolben 3 befestigt. Auf den Stift 34 ist dabei eine in Form einer Schraubendruckfeder ausgebildete Druckbegrenzungsfeder 71 aufgeschoben, die einerseits an der Scheibe 96 und andererseits durch die Dichtscheibe 97 geführt an der Kragenmutter 98 anliegt. Die Druckbegrenzungsfeder 71 ist gegen die an dem Dichtring 95 anliegende Scheibe 96 vorgespannt und hält so den Dichtring 95 in Position.

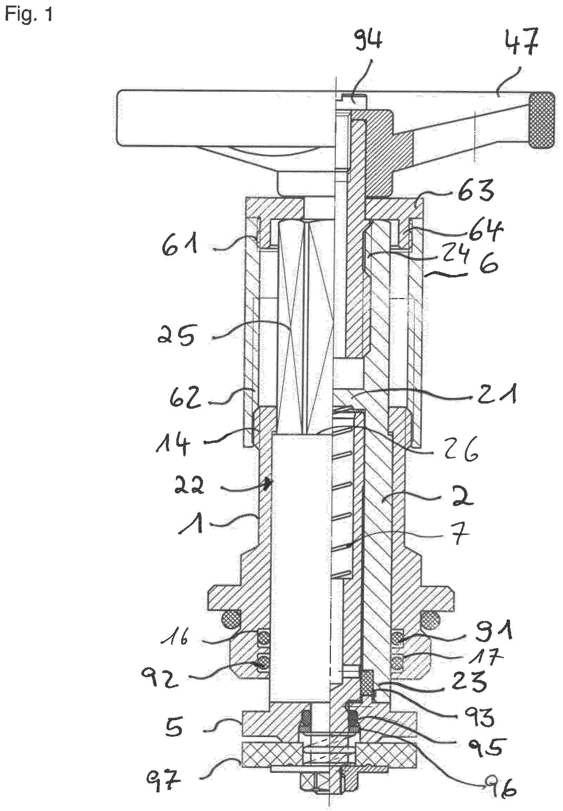

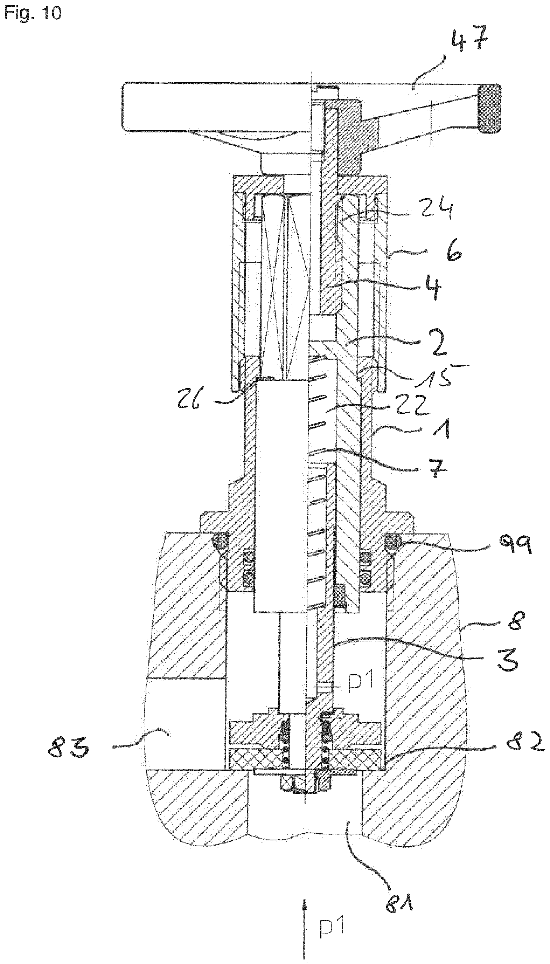

In Figur 10 ist das Ventiloberteil gemäß Figur 1 in eine schematisch angedeutete Armatur 8 eingesetzt gezeigt. Die Armatur 8 umfasst einen Wasserzulauf 81 und einen Wasserablauf 83. Der Wasserzulauf 81 weist einen Anschlag 82 auf, an dem die an dem Rückschlagkolben befestigte Dichtscheibe 97 anliegt. Der Rückschlagkolben 3 ist dabei über die Feder 7 gegen den Anschlag 82 vorgespannt. Die Gewindehülse 6 und der Druckzylinder 2 des Ventiloberteils sind über das mit den Spindel 4 formschlüssig verbundene Handrad 47 in die oberste Position verbracht. In dieser Position ist der maximale Abstand zwischen Druckzylinder 2 und Kegelscheibe 5 erreicht. In dem Wasserzulauf 81 und dem Wasserablauf 83 liegt ein identischer Druck p1 an.

Ist der Wasserablauf versperrt, beispielsweise über ein - nicht dargestelltes - Absperrventil im Zuge eines Wechsels einer Wasseruhr, kann bei einer Bewegung des Druckzylinders 2 in Richtung der Kegelscheibe 5 zum Versperren des Wasserzulaufs 81 das durch den Druckzylinder 2 verdrängte Wasser nicht entweichen, weshalb der in dem Wasserablauf 83 vorhandene Druck p2 ansteigt. Erreicht der Druck p2, der über die erste Sackbohrung 37 auf den Dichtring 95 einwirkt, einen definierten Grenzdruck, wird der Dichtring 95 mit der an diesem anliegenden Scheibe 96 entgegen der Druckbegrenzungsfeder 71 in Richtung der Kragenmutter 98 bewegt, wodurch das Wasser durch die erste Sackbohrung 37 über die Stufenbohrung 54 zur zweiten Sackbohrung 38 und von dieser über die Kerbe 39 in den Wasserzulauf 81 gelangen kann. Die erste Sackbohrung 37, die Stufenbohrung 54 und die zweite Sackbohrung 38 bilden zusammen mit der Kerbe 39, die unter der Kragenmutter 98 hindurchgeführt ist, einen Druckausgleichskanal. Wird der Grenzdruck wieder unterschritten, wird der Dichtring 95 durch die Druckbegrenzungsfeder 71 wieder in die Dichtposition zurück verbracht. Der Druckausgleichskanal ist somit verschlossen.

## Patentansprüche

1. Rückflussverhindererventil, mit einem Kopfstück (1), in dem ein Druckzylinder (2) angeordnet ist, der mit einer drehbar, jedoch axial fixiert gelagerten Spindel (4) verbunden ist, über deren Drehung der Druckzylinder (2) in dem Kopfstück (1) verschiebbar ist, und der einen Rückschlagkolben (3) aufnimmt, der in einem Kolbenraum (22) des Druckzylinders (2) verschiebbar angeordnet ist und der endseitig mit einer Dichtanordnung versehen ist, **dadurch gekennzeichnet, dass** durch die Dichtanordnung ein Druckausgleichskanal geführt ist, in dem eine Überdruckventilbaugruppe angeordnet ist.

2. Rückflussverhindererventil nach Anspruch 1, **dadurch gekennzeichnet, dass** die Dichtanordnung eine Kegelscheibe (5) umfasst, an der eine Dichtscheibe (97) anliegt.

3. Rückflussverhindererventil nach Anspruch 2, **dadurch gekennzeichnet, dass** die Kegelscheibe (5) einen ringförmigen Steg (53) aufweist, dessen Außendurchmesser gleich oder kleiner dem endseitigen Innendurchmesser des Kolbenraums (22) ist, in den er einschiebbar ist.

4. Rückflussverhindererventil nach einem der Ansprüche 1 bis 3, **dadurch gekennzeichnet, dass** der Rückschlagkolben (3) endseitig einen mit einem Außengewinde versehenen Stift (34) aufweist, auf dem die Dichtanordnung aufgeschoben und über eine Mutter befestigt ist.

5. Rückflussverhindererventil nach Anspruch 4, **dadurch gekennzeichnet, dass** der Druckausgleichskanal zumindest teilweise durch wenigstens eine radial in den Stift eingebrachte Sackbohrung (37, 38) und/oder wenigstens eine axial verlaufende, von außen in den Stift (34) eingebrachte Kerbe (39) gebildet ist, die sich über das Außengewinde erstreckt, auf das die Mutter aufgeschraubt ist.

6. Rückflussverhindererventil nach Anspruch 4 oder 5, **dadurch gekennzeichnet, dass** die Überdruckventilbaugruppe eine Dichtung umfasst, die mit einer Druckbegrenzungsfeder (71) verbunden ist, die mit einer definierten Federkraft gegen die Dichtung vorgespant ist und über welche die Dichtung in einer den Druckausgleichkanal abdichtenden Position gehalten ist, solange eine, durch einen auf die Dichtung wirkenden Druck bewirkte, der Druckbegrenzungsfeder (71) entgegen gerichtete Kraft die definierte Federkraft nicht übersteigt.

7. Rückflussverhindererventil nach Anspruch 6, **dadurch gekennzeichnet, dass** die Druckbegrenzungsfeder (71) als Schraubenfeder oder als Tellerfederpaket ausgebildet ist, die auf den Stift (34) diesen umgebend aufgebracht ist und an der Mutter anliegt.

8. Rückflussverhindererventil nach einem der Ansprüche 4 bis 7, **dadurch gekennzeichnet, dass** die Mutter eine Kragenmutter (98) ist.

9. Rückflussverhindererventil nach einem der Ansprüche 6 bis 8, **dadurch gekennzeichnet, dass** zwischen der Druckbegrenzungsfeder (71) und der Dichtung eine Scheibe (96) angeordnet ist.

10. Rückflussverhindererventil nach einem der Ansprüche 6 bis 9, **dadurch gekennzeichnet, dass** die Dichtanordnung eine Kegelscheibe (5) umfasst, in der eine sich in Richtung des Rückschlagkolbens (3) verjüngende Stufenbohrung (54) eingebracht ist, in welcher die Dichtung angeordnet ist.

11. Rückflussverhindererventil nach einem der vorgenannten Ansprüche, **dadurch gekennzeichnet, dass** die Spindel (4) drehfest mit einer Gewindehülse (6) verbunden ist, deren Innengewinde (62) mit einem in ein außen an dem Kopfstück (1) angeordneten Außengewinde (14) im Eingriff ist.

12. Rückflussverhindererventil nach Anspruch 11, **dadurch gekennzeichnet, dass** die Spindel (4) drehfest mit einem Deckelstück (63) verbunden ist, das sie durchdringt und an dem die Gewindehülse (6) befestigt ist.

13. Rückflussverhindererventil nach einem der vorgenannten Ansprüche, **dadurch gekennzeichnet, dass** die Spindel (4) endseitig ein Außengewinde (44) aufweist, das mit einem endseitig in dem Druckzylinder (2) angeordneten Innengewinde (24) im Eingriff ist.

14. Rückflussverhindererventil nach einem der vorgenannten Ansprüche, **dadurch gekennzeichnet, dass** an dem Druckzylinder (2) eine Feder (7) angeordnet ist, die gegen den Rückschlagkolben (3) vorgespannt ist.

15. Rückflussverhindererventil nach einem der vorgenannten Ansprüche, **dadurch gekennzeichnet, dass** die Innenwandung des Kopfstücks (1) an seinem der Spindel zugewandten Ende als Innenvielkant ausgebildet ist, wobei der Druckzylinder (2) zumindest teilweise außen mit einem korrespondierenden Außenvielkant versehen ist, über den es innerhalb des Kopfstücks (1) axial verschiebbar geführt ist.

## Claims

1. Backflow preventer valve with a head piece (1), in which a pressure cylinder (2) is arranged, which is connected to a rotatably but axially fixedly mounted spindle (4), via the rotation of which the pressure cylinder (2) is displaceable in the head piece (1) and which receives a non-return piston (3), which is displaceably arranged in a piston chamber (22) of the pressure cylinder (2) and which is provided at the end with a sealing arrangement, **characterised in that** a pressure compensation channel, in which a pressure relief valve assembly is arranged, is guided through the sealing arrangement.

2. Backflow preventer valve according to claim 1, **characterised in that** the sealing arrangement comprises a conical disc (5), against which bears a sealing disc (97).

3. Backflow preventer valve according to claim 2, **characterised in that** the conical disc (5) has an annular web (53), the outer diameter of which is equal to or smaller than the end-side inner diameter of the piston chamber (22), into which it can be inserted.

4. Backflow preventer valve according to one of claims 1 to 3, **characterised in that** the non-return piston (3) has a pin (34) at the end provided with an external thread, onto which the sealing arrangement is pushed and fastened via a nut.

5. Backflow preventer valve according to claim 4, **characterised in that** the pressure compensation channel is at least partially formed by at least one blind hole (37, 38) introduced radially into the pin and/or at least one axially extending notch (39) introduced into the pin (34) from outside, which extends over the external thread, onto which the nut is screwed.

6. Backflow preventer valve according to claim 4 or 5, **characterised in that** the pressure relief valve assembly comprises a seal, which is connected to a pressure-limiting spring (71), which is pretensioned against the seal with a defined spring force and via which the seal is held in a position sealing the pressure compensation channel as long as a force caused by a pressure acting on the seal and directed against the pressure limiting spring (71) does not exceed the defined spring force.

7. Backflow preventer valve according to claim 6, **characterised in that** the pressure-limiting spring (71) is designed as a coil spring or as a disc spring assembly, which is applied to the pin (34) surrounding it and bears against the nut.

8. Backflow preventer valve according to one of claims 4 to 7, **characterised in that** the nut is a collar nut (98).

9. Backflow preventer valve according to one of claims 6 to 8, **characterised in that** a disc (96) is arranged between the pressure-limiting spring (71) and the seal.

10. Backflow preventer valve according to one of claims 6 to 9, **characterised in that** the sealing arrangement comprises a conical disc (5), in which a stepped bore (54) tapering in the direction of the non-return piston (3) is provided, in which the seal is arranged.

11. Backflow preventer valve according to one of the previous claims, **characterised in that** the spindle (4) is non-rotatably connected to a threaded sleeve (6), the internal thread (62) of which is in engagement with an external thread (14) arranged on the outside of the head piece (1).

12. Backflow preventer valve according to claim 11, **characterised in that** the spindle (4) is non-rotatably connected to a cover piece (63), which penetrates it and to which the threaded sleeve (6) is fastened.

13. Backflow preventer valve according to one of the previous claims, **characterised in that** the spindle (4) has an external thread (44) at the end, which is in engagement with an internal thread (24) arranged at the end in the pressure cylinder (2).

14. Backflow preventer valve according to one of the previous claims, **characterised in that** a spring (7) is arranged on the pressure cylinder (2), which is pretensioned against the non-return piston (3).

15. Backflow preventer valve according to one of the previous claims, **characterised in that** the inner wall of the head piece (1) is designed as an inner polygon at its end facing the spindle, wherein the pressure cylinder (2) is at least partially provided on the outside with a corresponding outer polygon, via which it is axially displaceably guided within the head piece (1).

## Revendications

1. Clapet antiretour comprenant une pièce têtière (1) dans laquelle est disposé un cylindre de compression (2) relié à une broche (4) qui est en appui lui permettant certes sa rotation mais l'immobilisant sur le plan axial, cette rotation permettant au cylindre de compression (2) de coulisser dans la pièce têtière (1), ledit cylindre recevant un piston antiretour (3) disposé coulissant dans une chambre (22) de piston du cylindre de compression (2), et qui en son extrémité est muni d'un dispositif d'étanchéité, **caractérisé en ce que** le dispositif d'étanchéité est traversé par un conduit d'équilibrage de pression dans lequel est disposé un module à valve de surpression.

2. Clapet antiretour selon la revendication 1, **caractérisé en ce que** le dispositif d'étanchéité comprend une rondelle conique (5) contre laquelle applique un disque d'étanchéité (97).

3. Clapet antiretour selon la revendication 2, **caractérisé en ce que** la rondelle conique (5) présente une nervure annulaire (53) dont le diamètre extérieur est égal ou inférieur au diamètre intérieur terminal de la chambre (22) de piston dans laquelle elle peut être insérée.

4. Clapet antiretour selon les revendications 1 à 3, **caractérisé en ce que** le piston antiretour (3) présente en son extrémité une tige (34) munie d'un filetage extérieur, sur laquelle le dispositif d'étanchéité est enfilé et fixé via un écrou.

5. Clapet antiretour selon la revendication 4, **caractérisé en ce que** le conduit d'équilibrage de pression est formé au moins en partie par au moins un trou borgne (37, 38) ménagé radialement dans la tige et/ou au moins par une entaille (39) au tracé axial ménagée de l'extérieur dans la tige (34), laquelle entaille s'étend sur le filetage extérieur sur lequel est vissé l'écrou.

6. Clapet antiretour selon la revendication 4 ou 5, **caractérisé en ce que** le module à valve de surpression comprend un joint relié à un ressort limitateur de pression (71), ressort qui est précontraint contre le joint avec une force de ressort définie et via lequel le joint est maintenu dans une position étanchant le conduit d'équilibrage de pression, aussi longtemps qu'une force - provoquée par une pression agissant sur le joint et s'opposant au ressort limitateur de pression (71) - ne dépasse pas la force de ressort définie.

7. Clapet antiretour selon la revendication 6, **caractérisé en ce que** le ressort limitateur de pression (71) est configuré en forme de ressort hélicoïdal ou de paquet de ressorts assiettes qui est monté sur la tige (34) en entourant cette dernière et qui applique contre l'écrou.

8. Clapet antiretour selon l'une des revendications 4 à 7, **caractérisé en ce que** l'écrou est un écrou à collet (98).

9. Clapet antiretour selon l'une des revendications 6 à 8, **caractérisé en ce qu'**entre le ressort limitateur de pression (71) et le joint est disposé une rondelle (96).

10. Clapet antiretour selon l'une des revendications 6 à 9, **caractérisé en ce que** le dispositif d'étanchéité comprend une rondelle conique (5) dans laquelle a été ménagé un alésage étagé (54) allant en se rétrécissant en direction du piston antiretour (3), alésage dans lequel est disposé le joint.

11. Clapet antiretour selon l'une des revendications précédentes, **caractérisé en ce que** la broche (4) est reliée sans pouvoir tourner avec une douille filetée (6), douille dont le filetage intérieur (62) engrène avec un filetage extérieur (14) disposé à l'extérieur contre la pièce têtière (1).

12. Clapet antiretour selon la revendication 11, **caractérisé en ce que** la broche (4) est reliée sans pouvoir tourner avec une pièce couvercle (63) qui la traverse et contre laquelle pièce est fixée la douille filetée (6).

13. Clapet antiretour selon l'une des revendications précédentes, **caractérisé en ce que** la broche (4) présente en son extrémité un filetage extérieur (44) qui engrène dans un filetage intérieur (24) disposé à l'extrémité dans le cylindre de compression (2).

14. Clapet antiretour selon l'une des revendications précédentes, **caractérisé en ce que** contre le cylindre de compression (2) est disposé un ressort (7) précontraint contre le piston antiretour (3).

15. Clapet antiretour selon l'une des revendications précédentes, **caractérisé en ce que** la paroi intérieure de la pièce têtière (1) est configurée en polygone intérieur en son extrémité regardant la broche, sachant que le cylindre de compression (2) est muni au moins en partie à l'extérieur d'un polygone extérieur correspondant via lequel il peut coulisser axialement de manière guidée à l'intérieur de la pièce têtière (1).
